# EUROPÄISCHE PATENTANMELDUNG

(11) **EP 3 316 278 A1**
(43) Veröffentlichungstag der Anmeldung: **02.05.2018**
(21) Anmeldenummer: 16195770.9
(22) Anmeldetag: 26.10.2016
(51) Int. Cl.: H01J 49/10, H01J 49/00

(54) **VERFAHREN ZUR SPEKTROMETRIE**

(71) Anmelder: NovionX UG (haftungsbeschränkt), 88131 Lindau (DE)
(72) Erfinder: KATZMANN, Gregory, 88131 Lindau (DE)
(74) Vertreter: Hoefer & Partner Patentanwälte mbB

(57) **Zusammenfassung**

Die Erfindung betrifft ein Verfahren zur Spektrometrie, insbesondere Massenspektrometrie, Ionenmobilitätsspektrometrie oder optische Emissionsspektroskopie, einer Probe, umfassend folgende Schritte: Bereitstellen eines Solid-State-Generators zum Erzeugen eines hochfrequenten Signals mit einem Stellelement zum Variieren der Leistung des Signals, Bereitstellen eines vom Signal gespeisten Plasmazündkopfes zum Erzeugen eines Plasmastrahls, Beaufschlagen einer Probe mit dem Plasmastrahl, Durchführen eines ersten Messvorgangs, wobei der Plasmastrahl mit einer ersten Leistung des Solid-State- Generators erzeugt wird und ein von der Probe emittiertes Spektrums, vorzugsweise Ionen und/oder optisches Spektrum, mit einem Spektrometer erfasst wird, wobei die erste Leistung zu einer weichen Ionisierung der Probe führt, und Durchführen eines zweiten Messvorgangs an derselben Probe, wobei der Plasmastrahl mit einer zweiten Leistung des Solid-State-Generators erzeugt wird und ein von der Probe emittiertes Spektrums, vorzugsweise Ionen und/oder optisches Spektrum, mit dem Spektrometer erfasst wird, wobei die zweite Leistung zu einer harten Ionisierung der Probe führt.

## Beschreibung

Die Erfindung betrifft ein Verfahren zur Spektrometrie, insbesondere Massenspektrometrie, Ionenmobilitätsspektrometrie oder optische Emissionsspektroskopie, einer Probe. Des Weiteren betrifft die Erfindung eine Spektrometrievorrichtung.

Bei den hier betrachteten Verfahren zur Spektrometrie bzw. Spektroskopie wird die Probe mit einem Ionenstrahl beaufschlagt. Das dabei entstehende Spektrum, insbesondere die von der Probe ausgehenden Ionen, werden mit einem entsprechenden Spektrometer erfasst und ausgewertet. Ein vorbekanntes Verfahren zeigt EP 306 233 1 A.

Es ist Aufgabe der Erfindung ein Verfahren zur Spektrometrie bereitzustellen, das mit möglichst geringem Aufwand an unterschiedlichsten Proben durchführbar ist und dabei bestmöglichste Ergebnisse bei sehr kurzen Analysezeiten zur Analyse der Probe ermöglicht.

Die Lösung dieser Aufgabe erfolgt durch die Merkmale der unabhängigen Ansprüche. Die abhängigen Ansprüche haben vorteilhafte Ausgestaltungen der Erfindung zum Gegenstand Somit wird die Aufgabe gelöst durch ein Verfahren zur Spektrometrie, insbesondere Massenspektrometrie, Ionenmobilitätsspektrometrie oder optische Emissionsspektroskopie, einer Probe, umfassend folgende Schritte:
Bereitstellen eines Solid-State-Generators, auch als Mikrowellengenerator bezeichnet, zum Erzeugen eines hochfrequenten Signals mit einem Stellelement zum Variieren der Leistung des Signals. Vorzugsweise kann auch mit einem entsprechenden Stellelement die Frequenz variiert werden.

Bereitstellen eines vom Signal gespeisten Plasmazündkopfes zum Erzeugen eines Plasmastrahls und Beaufschlagen der Probe mit dem Plasmastrahl.

Durchführen eines ersten Messvorgangs, wobei der Plasmastrahl mit einer ersten Leistung des Solid-State-Generators erzeugt wird und ein von der Probe emittiertes Spektrum mit einem Spektrometer erfasst wird, wobei die erste Leistung zu einer weichen Ionisierung der Probe, insbesondere der Moleküle der Probe, führt.

Durchführen eines zweiten Messvorgangs an derselben Probe, wobei der Plasmastrahl mit einer zweiten Leistung des Solid-State-Generators erzeugt wird und ein von der Probe emittiertes Spektrum mit dem Spektrometer erfasst wird, wobei die zweite Leistung zu einer harten Ionisierung der Probe, insbesondere der Moleküle der Probe, führt.

Das von der Probe emittierte Spektrum ist insbesondere gebildet durch von der Probe erzeugte Ionen in Gasphase und/oder ein emittiertes optisches Spektrum,

Erfindungsgemäß wird ein Solid-State-Generator zur Erzeugung des hochfrequenten Signals verwendet. Dieser Solid-State-Generator erzeugt nicht etwa mittels Röhren bzw. einem Magnetron das hochfrequente Signal, sondern nutzt Transistoren bzw. integrierte Schaltkreise zur Erzeugung des Signals.

Das Signal wird, beispielsweise über ein Kabel, zum Plasmazündkopf übertragen. Die im Rahmen dieser Erfindung beschriebene "Leistung" wird von dem Solid-State-Generator erzeugt und im Plasmazündkopf zum Zünden bzw. Aufrechterhalten des Plasmas genutzt. Wenn relative oder absolute Größen der Leistung angegeben sind, so bezieht sich dies stets auf die am Eingang des Plasmazündkopfes anliegende Leistung. Die Technologie des Solid-State-Generators ermöglicht eine nahezu beliebige Variation dieser Leistung.

Im Rahmen der Erfindung wurde erkannt, dass die Variation der Leistung dazu genutzt werden kann, an ein und derselben Probe sowohl eine weiche Ionisierung als auch eine harte Ionisierung durchzuführen. Im Stand der Technik wurden hierzu immer unterschiedliche Solid-State-Generatoren zur Erzeugung des hochfrequenten Signals und unterschiedliche Plasmazündköpfe verwendet. Dabei wurden die weiche Ionisierung und die harte Ionisierung an unterschiedlichen Proben durchgeführt.

Erfindungsgemäß können nun zwei unterschiedliche Messvorgänge mit zwei unterschiedlichen Leistungen, jedoch mit demselben Solid-State-Generator, demselben Plasmazündkopf und an derselben Probe durchgeführt werden. Die Leistungen für die unterschiedlichen Messvorgänge werden dabei so gewählt, dass zunächst die weiche Ionisierung und anschließend die harte Ionisierung der Probe erfolgen. Bei der weichen Ionisierung wird die Probe nicht oder nur geringfügig fragmentiert. Es werden hauptsächlich Molekülionen oder Quasi-Molekülionen (z.B. [M+H]⁺) gebildet. Bei der harten Ionisierung ist die zugeführte Energie über den Plasmastrahl so hoch, dass zusätzlich zur Ionisierung Fragmentierungsreaktionen ausgelöst werden. Diese Fragmentierungen sind von der chemischen Struktur der Probe abhängig und können zu weiteren Strukturaufklärung verwendet werden.

Besonders bevorzugt ist die Probe während der Durchführung des Verfahrens außerhalb des Spektrometers angeordnet. Die Probe ist dabei der Umgebungsluft unter Normaldruck ausgesetzt oder befindet sich in einer Messkammer mit inertem Gas, wie Stickstoff, Argon oder einem anderen Edelgas. Es handelt sich somit um eine "Ambient Ionization".

Die Proben, die mit vorliegendem Verfahren untersucht werden können sind insbesondere: Feststoffe, Flüssigkeiten oder Gase. Insbesondere werden Pillen, Pulver, komplexe Mischungen mit mehreren Inhaltsstoffen, Oberflächen, Explosivstoffe, Betäubungsmittel, Pharmazeutika, chemische Kampfstoffe, Nahrungsmittel, tierische Nahrungsmittel, Pflanzen, Pflanzenteile, Rohextrakte, Extrakte, Tabletten, aktive pharmazeutische Wirkstoffe, Zellen aller Art, Gewebe (tierisches und menschliches) und Umweltgifte untersucht.

Bei dem Spektrometer handelt es sich insbesondere um einen Ionenanalysator, Massenspektrometer, Ionenmobilitätsspektrometer oder optischen Spektrometer, welche die Ionen und Emission von Atomen und Molekülen und die Absorption messen können.

Die zweite Leistung ist höher als die erste Leistung. Insbesondere beträgt die zweite Leistung zumindest das 1,5-fache, vorzugsweise zumindest das 3-fache, weiter vorzugsweise zumindest das 5-fache, der ersten Leistung.

Die erste Leistung zur Erzeugung des Plasmastrahls im ersten Messvorgang liegt vorzugsweise zwischen 1 W und 70 W, besonders vorzugsweise zwischen 5 W und 50 W. In Abhängigkeit der Probe kann in diesem Leistungsbereich die weiche Ionisierung durchgeführt werden.

Die zweite Leistung zur Erzeugung des Plasmastrahls im zweiten Messvorgang liegt vorzugsweise zwischen 30 W und 500 W, vorzugsweise zwischen 40 W und 200 W. In abhängiger der Probe kann in diesem Leistungsbereich die harte Ionisierung durchgeführt werden.

Bevorzugt ist vorgesehen, dass die beiden Messvorgänge abwechselnd, mehrfach hintereinander an derselben Probe ausgeführt werden. Hierzu wird die Leistung mehrfach auf die erste Leistung und die zweite Leistung gestellt. Dies erfolgt insbesondere durch eine Steuervorrichtung mit einer Recheneinheit. Im Spektrometer kann somit abwechselnd die weiche und harte Ionisierung der Moleküle beobachtet werden.

Insbesondere wird die Leistung abwechselnd und gepulst zwischen der ersten Leistung und der zweiten Leistung hin und her gestellt wird. Es entsteht somit ein gepulstes Leistungssignal. Vorzugsweise wird direkt von der ersten Leistung auf die zweite Leistung erhöht und/oder von der zweiten Leistung auf die erste Leistung reduziert. Die einzelnen Messvorgänge, also die jeweilige Beaufschlagung der Probe mit dem Plasmastrahl der jeweiligen Leistung, dauern vorzugsweise zwischen wenigen Mikrosekunden und mehreren Sekunden.

Ferner ist bevorzugt vorgesehen, die Leistung abwechselnd von der ersten Leistung auf die zweite Leistung kontinuierlich zu erhöhen und/oder wieder kontinuierliche auf die erste Leistung zu senken. Der Wechsel zwischen den beiden Leistungen erfolgt also entlang einer Rampe. Eine Leistungsänderung in mehreren kleinen Stufen wird auch als "kontinuierlich" angesehen. Auch die kontinuierliche Leistungsänderung wird vorzugsweise mehrmals ausgeführt, sodass im Spektrometer mehrmals abwechselnd die weiche und harte Ionisierung der Moleküle beobachtet werden kann. Die Leistungsänderung zwischen den beiden Leistungen dauern vorzugsweise zwischen wenigen Mikrosekunden und mehreren Sekunden.

Die gepulste Leistungsänderung und die kontinuierliche Leistungsänderung können auch kombiniert werden. So kann die Leistung z.B. gepulst auf die zweite Leistung erhöht und kontinuierlich auf die erste Leistung wieder gesenkt werden, oder umgekehrt.

Vorzugsweise ist vorgesehen, dass zumindest zwei Durchgänge, jeweils mit dem ersten und zweiten Messvorgang, innerhalb von 10 Sekunden, vorzugsweise innerhalb von 5 Sekunden, durchgeführt werden.

Das hochfrequente Signal weist vorzugsweise eine Frequenz zwischen 100 MHz und 10 GHz, besonders vorzugsweise zwischen 1 GHz und 5 GHz, auf. In Versuchen hat sich gezeigt, dass insbesondere in diesem Frequenzbereich eine Untersuchung unterschiedlichster Proben möglich ist. Des Weiteren hat sich gezeigt, dass in diesem Frequenzbereich das vorgestellte Verfahren mit den unterschiedlichen Messvorgängen gut durchgeführt werden kann.

Die hier beschriebenen zwei Messvorgänge sind die minimale Anforderung, um die Probe sowohl bei der harten als auch bei der weichen Ionisierung zu untersuchen. Allerdings ist bevorzugt auch vorgesehen, zwischen den beiden Messungen den Plasmastrahl mit unterschiedlicher Leistung zu erzeugen und entsprechend die Probe mit dem Plasmastrahl zu beaufschlagen. So kann auch zwischen den beiden Messvorgängen das imitierte Spektrum mit dem Spektrometer erfasst werden und eine entsprechende Auswertung durchgeführt werden.

Vorzugsweise ist vorgesehen, dass der zweite Messvorgang unmittelbar auf den ersten Messvorgang folgt. Dies ist im Rahmen des hier vorgestellten Verfahrens möglich, da weder der Solid-State-Generator noch der Plasmazündkopf gewechselt werden müssen. Auch die Probe verbleibt an Ort und Stelle. Unter "unverzüglich" ist insbesondere zu verstehen, dass zwischen den beiden Messungen höchstens 10 Sekunden, vorzugsweise höchstens 5 Sekunden, weiter vorzugsweise höchsten 1 Sekunde, besonders vorzugsweise höchstens 1 Millisekunde, liegen. Noch bevorzugter liegen zwischen den beiden Messungen höchstens 10 Mikrosekunden, vorzugsweise höchsten 5 Mikrosekunden. Zwischen den beiden Messungen können, wie oben beschrieben, weitere Messungen durchgeführt werden, z.B. wenn die Leistung kontinuierlich bis zur zweiten Leistung erhöht wird und der Plasmastrahl dabei aufrecht erhalten bleibt.

Nach dem ersten Messvorgang mit der ersten Leistung kann die Leistung des Solid-State-Generators schrittweise und/oder kontinuierlich bis zur zweiten Leistung erhöht werden. Darüber hinaus ist es auch bevorzugt vorgesehen, nach dem ersten Messvorgang die Leistung zunächst zu verringern, insbesondere auf 0. Daraufhin wird unmittelbar die Leistung des Solid-State-Generators bis zur zweiten Leistung erhöht.

Des Weiteren ist bevorzugt vorgesehen, auf die zweite Leistung zu erhöhen, wenn bei dem Spektrometer die weiche Ionisierung erkannt wird. Dies kann insbesondere durch eine automatisierte Auswertung des erfassten Spektrums erfolgen.

Des Weiteren ist bevorzugt vorgesehen, dass zumindest zwei unterschiedliche Plasmazündköpfe bereitgestellt werden. Die unterschiedlichen Plasmazündköpfe werden für unterschiedliche Proben, beispielsweise flüssige und feste Proben, verwendet. Vor dem Beaufschlagen der Probe mit dem Plasmastrahl wird der zur Probe passende Plasmazündkopf elektrisch leitend mit dem Solid-State-Generator verbunden. Vorzugsweise wird eine flüssige Probe oder das Aerosol durch den Innenleiter des Plasmazündkopfes in das Plasma direkt eingeführt.

Die Erfindung umfasst des Weiteren eine Spektrometrievorrichtung. Diese ist vorzugsweise zur Durchführung des beschriebenen Verfahrens ausgebildet. Die Spektrometrievorrichtung umfasst den Solid-State-Generator zum Erzeugen des hochfrequenten Signals. Der Solid-State-Generator umfasst ein entsprechendes Stellelement zum Variieren der Leistung und insbesondere auch der Frequenz des Signals. Des Weiteren ist der vom Signal gespeiste Plasmazündkopf vorgesehen. Der Plasmazündkopf ist zum Erzeugen des Plasmastrahls und zum Beaufschlagen der Probe ausgebildet. Darüber hinaus ist eine Steuervorrichtung vorgesehen. Die Steuervorrichtung ist ausgebildet zum Ansteuern des Stelleelements, um einen Plasmastrahl mit zumindest zwei unterschiedlichen Leistungen zu erzeugen.

Vorzugsweise kann die Steuervorrichtung auch die Frequenz des Signals variieren. Die Steuervorrichtung kann in den Solid-State-Generator integriert sein, oder als externe Vorrichtung an den Solid-State-Generator angeschlossen werden.

Insbesondere ist die Steuervorrichtung als programmierbare Recheneinheit ausgebildet. Dadurch kann der benötigte zeitliche Ablauf der Leistung in der Steuervorrichtung hinterlegt werden.

Die Steuervorrichtung ist vorzugsweise dazu ausgebildet, die beiden Messvorgänge abwechselnd, mehrfach hintereinander an derselben Probe durchzuführen. Hierzu wird die Leistung mehrfach auf die erste Leistung und die zweite Leistung gestellt. Im Spektrometer kann somit abwechselnd die weiche und harte Ionisierung der Moleküle beobachtet werden.

Insbesondere wird die Leistung durch die Steuervorrichtung abwechselnd und gepulst zwischen der ersten Leistung und der zweiten Leistung hin und her gestellt wird. Es entsteht somit ein gepulstes Leistungssignal. Vorzugsweise wird mittels der Steuervorrichtung direkt von der ersten Leistung auf die zweite Leistung erhöht und/oder von der zweiten Leistung auf die erste Leistung reduziert. Die einzelnen Messvorgänge, also die jeweilige Beaufschlagung der Probe mit dem Plasmastrahl der jeweiligen Leistung, dauern vorzugsweise zwischen wenigen Mikrosekunden und mehreren Sekunden.

Ferner ist bevorzugt vorgesehen, die Leistung mittels der Steuervorrichtung abwechselnd von der ersten Leistung auf die zweite Leistung kontinuierlich zu erhöhen und/oder wieder kontinuierliche auf die erste Leistung zu senken. Der Wechsel zwischen den beiden Leistungen erfolgt also entlang einer Rampe. Eine Leistungsänderung in mehreren kleinen Stufen wird auch als "kontinuierlich" angesehen. Auch die kontinuierliche Leistungsänderung wird vorzugsweise mehrmals ausgeführt, sodass im Spektrometer mehrmals abwechselnd die weiche und harte Ionisierung der Moleküle beobachtet werden kann. Die Leistungsänderung zwischen den beiden Leistungen dauern vorzugsweise zwischen wenigen Mikrosekunden und mehreren Sekunden.

Die gepulste Leistungsänderung und die kontinuierliche Leistungsänderung können auch kombiniert werden. So kann die Leistung durch die Steuervorrichtung z.B. gepulst auf die zweite Leistung erhöht und kontinuierlich auf die erste Leistung wieder gesenkt werden, oder umgekehrt.

Sowohl in dem erfindungsgemäßen Verfahren als auch in der erfindungsgemäßen Spektrometrievorrichtung wird vorzugsweise ein Plasmazündkopf gemäß folgender Spezifikation angewendet:
Der Plasmazündkopf umfasst eine Zuleitung, eine Betriebseinheit und eine Zündeinheit, wobei die Betriebseinheit eine elektrische Länge von Lambda/2 und die Zündeinheit im gezündeten Zustand eine hochohmige Eingangsimpedanz aufweist.

Unter Zündeinheit ist dabei der Bereich des Hochfrequenzleitungssystems zu verstehen, durch den im Moment der Zündung eine Hochspannung zur Zündung des Plasmas erzeugt wird. Unter der Betriebseinheit ist der Teil des Hochfrequenzleitungssystems zu verstehen, über den im Betriebsfall das hochfrequente in das Plasma eingekoppelt wird. Unter der Zuleitung ist die Zuleitung des hochfrequenten Signals zu verstehen, bevor sie sich in Zündeinheit und Betriebseinheit aufteilt. Unter der Zuführleitung ist der Teil des hochfrequenten Leitungssystems zu verstehen, der von dem Teilerpunkt zwischen Zündeinheit und Betriebseinheit zum Impedanztransformator führt. Unter dem Plasmabereich ist der Bereich zu verstehen, in dem das Plasma gezündet wird.

Der Plasmazündkopf mit dem Impedanztransformator hat den Vorteil, dass weder die Frequenz noch sonst eine Größe zwischen dem Zünden und dem Betrieb umgeschaltet werden muss. Der Plasmazündkopf hat so den Vorteil, dass bei einer festen Frequenz eine Hochspannung erzeugt werden kann und sobald ein Plasma entsteht, in dieses bestens Energie eingespeist werden kann.

Vorteilhafterweise kann der Wellenwiderstand der Zuleitung vor der Signalteilung in Betriebseinheit und Zündeinheit in der Größenordnung der Plasmafußpunktimpedanz liegen.

Die die Zündeinheit kann eine elektrische Länge von ungefähr Lambda/4 aufweisen. So kann die hochohmige Eingangsimpedanz durch Lambda/4-Transformation erzielt werden.

Der Impedanztransformator kann ein einstufiger oder ein mehrstufiger insbesondere ein zweistufiger Impedanztransformator sein. Für einen zweistufigen Impedanztransformator lässt sich als Ersatzschaltung ein Spartrafo, bestehend aus einem ersten Teil und einem zweiten Teil und einem sogenannten Gamma-Transformator, bestehend aus einem dritten Teil und der Endkapazität zwischen dem Ende der Zündeinheit und der Gehäusemasse, verwenden. Führt man zwischen der Zuführleitung und einem Teil des Impedanztransformators einen Spalt ein, entsprechend einem Serienkondensator, so erhält man am Eingang aus dem Kondensator und einem Teil des Impedanztransformators eine weitere Transformationsstufe in Form eines zweiten Gamma-Transformators.

Von Vorteil kann weiter sein, wenn der Plasmazündkopf, einen rohrförmigen metallischen Außenleiter aufweist, der koaxial um die Zündeinheit angeordnet ist. Neben einer solchen koaxialen Realisierungsform sind andere Ausgestaltungen des Hochfrequenzleitungssystems möglich. So lassen sich mittels Hohlleiter größte Leistungen ohne Elektrodenproblematik einsetzen. Mittels Koplanarleitungen und insbesondere Streifenleitungen lassen sich kleine druckdichte Zündeinheiten herstellen. Im Fall einer koaxialen Ausgestaltung kann, ist nur eine Zündung erwünscht, der gesamte Innenraum oder ein Teil des Innenraums mittels eines Dielektrikums gegebenenfalls druckdicht gefüllt sein.

Die Betriebseinheit kann mittels kapazitiver Isolation an eine niederfrequente Betriebsquelle angeschlossen sein Ein elektrisches Hybrid-Plasma wird aus den hochfrequenten und den niederfrequenten Energieanteilen erzeugt. Hierdurch lässt sich ein Hybrid-Plasma mit sehr hoher Leistungsdichte erzeugen. Es sind sogar höhere Energiedichten als beim Lichtlaser vorstellbar.

Vorzugsweise umfasst der Plasmazündkopf eine oder mehrere Gaszuleitungen und wird in dieser Konfiguration auch als Plasma-Strahlerkopf bezeichnet. Durch eine durch die Gaszuleitung fließende Gasströmung wird ein Plasmastrahl erzeugt. Dabei ist zu beachten, dass das Prozessgas die Elektroden nicht angreifen darf. Als Prozessgas sind insbesondere Edelgase insbesondere argonhaltige Gase oder Umgebungsluft möglich. Auch fast alle sonstigen Gase sind verwendbar. Es entstehen jedoch bei der Plasmageneration eines verunreinigten Gases keine direkten Emissionen wie bei einer Verbrennung.

Vorteilhafterweise kann das zum Plasmabereich offene Ende der Gasleitung einen ellipsoiden Querschnitt aufweisen. Besonders bevorzugt ist ein breiter ellipsoider Querschnitt.

Weist das zum Plasmabereich offene Ende der Gasleitung eine kleine Austrittsöffnung auf, insbesondere in einer Größenordnung von etwa 0,01 mm bis 4 mm insbesondere von etwa 0,05 mm bis 2 mm, kann ein dünner und somit sehr leistungsstarker Plasmastrahl geformt werden.

Weiter vorteilhaft ist, wenn das zum Plasmabereich offene Ende der Gasleitung geradlinig verläuft.

Besonders von Vorteil ist, wenn das zum Plasmabereich offene Ende der Gasleitung parallel zu einer Mittel-Achse des Plasmazündkopfs in Strahlrichtung verläuft. So kann gesichert werden, dass der Plasmastrahl gerade aus dem Strahler heraustritt. Liegt das offene Ende der Gasleitung auf der Mittel-Achse tritt der Plasmastrahl mittig aus dem Strahler heraus.

Besonders vorteilhaft ist, wenn die Betriebseinheit als Gaszuleitung ausgebildet ist. Hierfür ist die Betriebseinheit als Kanüle ausgestaltet. Dies hat den Vorteil, dass die Betriebseinheit durch den Gasfluss gekühlt wird. Durch die Kühlung kommt es länger nicht zur Überhitzung. Daher ist es bis zu größeren Leistungen möglich, Elektroden zu verwenden, die nicht aus Wolfram gefertigt sind. Dies erlaubt den Einsatz von Umgebungsluft als Prozessgas. Zudem kann der Gasverbrauch reduziert werden. Bei entsprechender Ausgestaltung des zum Plasmabereich offenen Endes durch entsprechende Querschnittsformgebung, das heißt entweder ellipsolid oder mit einer kleinen runden Austrittsöffnung sowie einem entsprechendem Verlauf, sodass das Plasma mittig und gerade austritt, ist diese Ausgestaltung besonders vorteilhaft.

Auch die Zuführungsleitung kann als Gaszuleitung ausgebildet sein. Auch hier ist eine Kühlung zu erreichen.

Schließlich kann ein Teil des Impedanztransformators als Gaszuleitung ausgebildet sein. Hierdurch kann ein zusammenhängendes Kanülenrohr aus einem Teil des Impedanztransformators der Zuführungsleitung und der Betriebseinheit als alleinige Gaszuführung dienen. Am elektrischen Aufbau ändert sich nichts.

Der Plasmastrahl wirkt als Antenne. Er kann daher mit einem Drahtgitter umgeben sein, um Störungen zu vermeiden. Das Drahtgitter ist vorteilhafterweise kürzer als der Strahl, damit der heißeste Punkt im Strahl genutzt werden kann. Von Vorteil ist, wenn die Maschen des Gitters kleiner als die elektrische Wellenlänge sind.

Vorzugsweise wird bei einer festen Frequenz über die Zündeinheit eine Hochspannung zur Zündung des Plasmas erzeugt und das hochfrequente Signal wird über die parallel geschaltete Betriebseinheit zum Plasmabereich gekoppelt wird.

Vorzugsweise wird als Prozessgas ein argonhaltiges Gas oder Umgebungsluft verwendet wird.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig.1: eine erfindungsgemäße Spektrometrievorrichtung zur Durchführung des erfindungsgemäßen Verfahrens,
- Fig. 2, 3: unterschiedliche Leistungen über der Zeit,
- Fig. 4: eine erste vorteilhafte Ausgestaltung des Plasmazündkopfs, und
- Fig. 5: eine zweite vorteilhafte Ausgestaltung des Plasmazündkopfs.

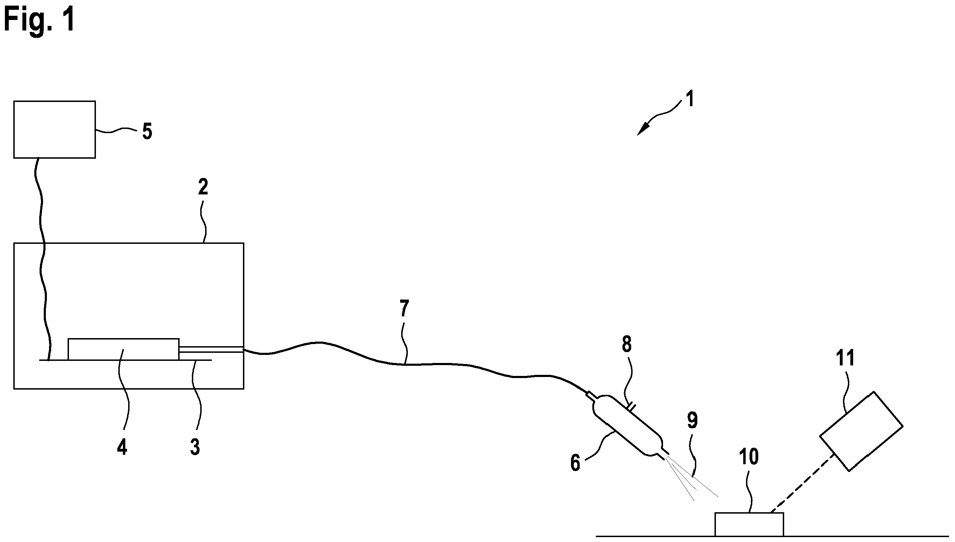

Figur 1 zeigt eine Spektrometrievorrichtung 1, ausgebildet zur Durchführung des Verfahrens. Die Spektrometrievorrichtung 1 umfasst einen Solid-State-Generator 2. In dem Solid-State-Generator 2 befindet sich eine Platine 3. Auf der Platine 3 sind mehrere Solid-State-Elemente 4 zur Erzeugung eines hochfrequenten Signals angeordnet. Des Weiteren umfasst der Solid-State-Generator 2 ein Stellelement, insbesondere auch auf der Platine 3, zum Verändern der vom Solid-State-Generator 2 erzeugten Leistung.

Ferner ist eine Steuervorrichtung 5 vorgesehen die sich entweder außerhalb oder innerhalb des Solid-State-Generators 2 befindet und über das Stellelement die Leistung des Solid-State-Generators 2 einstellt.

Über ein Kabel 7 ist der Solid-State-Generator 2 mit einem Plasmazündkopf 6 verbunden. Über das Kabel 7 wird das hochfrequente Signal mit der eingestellten Leistung in den Plasmazündkopf 6 eingespeist. Der Plasmazündkopf 6 weist insbesondere eine Gaszuführung 117 auf.

Mit dem Plasmazündkopf 6 wird ein Plasmastrahl 9 erzeugt. Der Plasmastrahl 9 ist auf eine Probe 10 gerichtet. Die von der Probe 10 desorbierten Ionen werden von einem Spektrometer 11 erfasst.

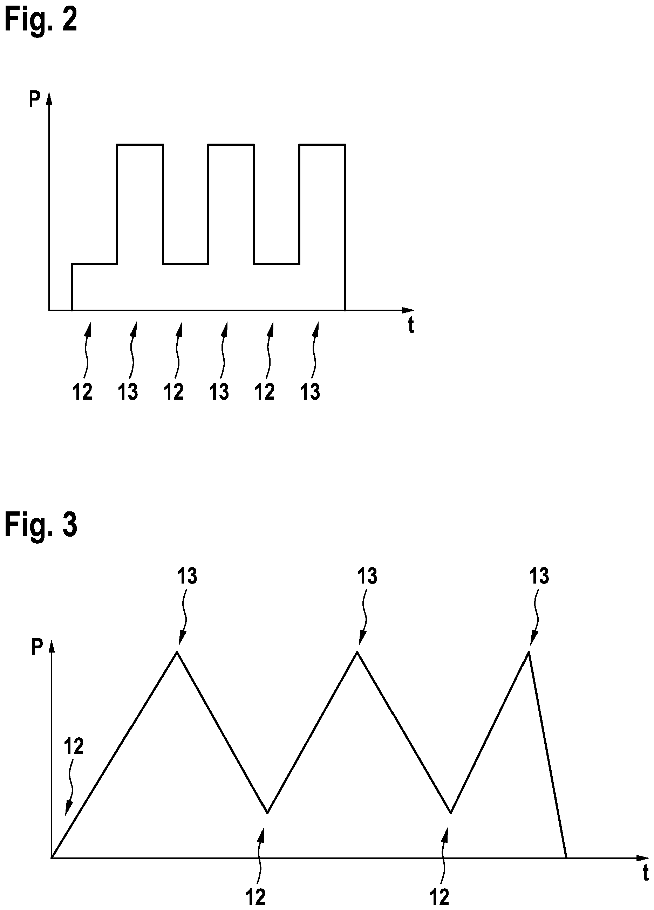

Mittels der Steuervorrichtung 5 wird der Plasmastrahl 9 mit zwei unterschiedlichen Leistungen aufeinanderfolgend auf die Probe 10 abgesetzt. Bei den unterschiedlichen Leistungen erfolgen zumindest zwei Messvorgänge 12, 13. Figuren 2 und 3 zeigen rein schematisch zwei unterschiedliche Verläufe der Leistung zur Durchführung dieser beiden Messvorgänge 12, 13.

Die Steuervorrichtung 5 ist vorzugsweise dazu ausgebildet, die beiden Messvorgänge 12, 13 abwechselnd, mehrfach hintereinander an derselben Probe durchzuführen. Hierzu wird die Leistung mehrfach abwechselnd auf die erste Leistung und die zweite Leistung gestellt. Im Spektrometer kann somit abwechselnd die weiche und harte Ionisierung der Moleküle beobachtet werden.

Figur 2 zeigt wie die Leistung P über die Zeit t durch die Steuervorrichtung 5 abwechselnd und gepulst zwischen der ersten Leistung und der zweiten Leistung hin und her gestellt wird. Es entsteht somit ein gepulstes Leistungssignal. Vorzugsweise wird mittels der Steuervorrichtung 5 direkt von der ersten Leistung auf die zweite Leistung erhöht und von der zweiten Leistung auf die erste Leistung reduziert. Die einzelnen Messvorgänge 12, 13, also die jeweilige Beaufschlagung der Probe mit dem Plasmastrahl der jeweiligen Leistung, dauern vorzugsweise zwischen wenigen Mikrosekunden und mehreren Sekunden. Alternativ zum gezeigten Signalverlauf, kann die Leistung zwischen den Messvorgängen 12, 13 auch kurzzeitig auf annähern 0 abgesenkt werden.

Figur 3 zeigt, dass die Leistung P über die Zeit t mittels der Steuervorrichtung 5 abwechselnd von der ersten Leistung auf die zweite Leistung kontinuierlich erhöht und wieder kontinuierliche auf die erste Leistung abgesenkt wird. Der Wechsel zwischen den beiden Leistungen erfolgt hier entlang einer Rampe. Die kontinuierliche Leistungsänderung wird mehrmals ausgeführt, sodass im Spektrometer mehrmals abwechselnd die weiche und harte Ionisierung der Moleküle beobachtet werden kann. Die Leistungsänderung zwischen den beiden Leistungen dauern vorzugsweise zwischen wenigen Mikrosekunden und mehreren Sekunden.

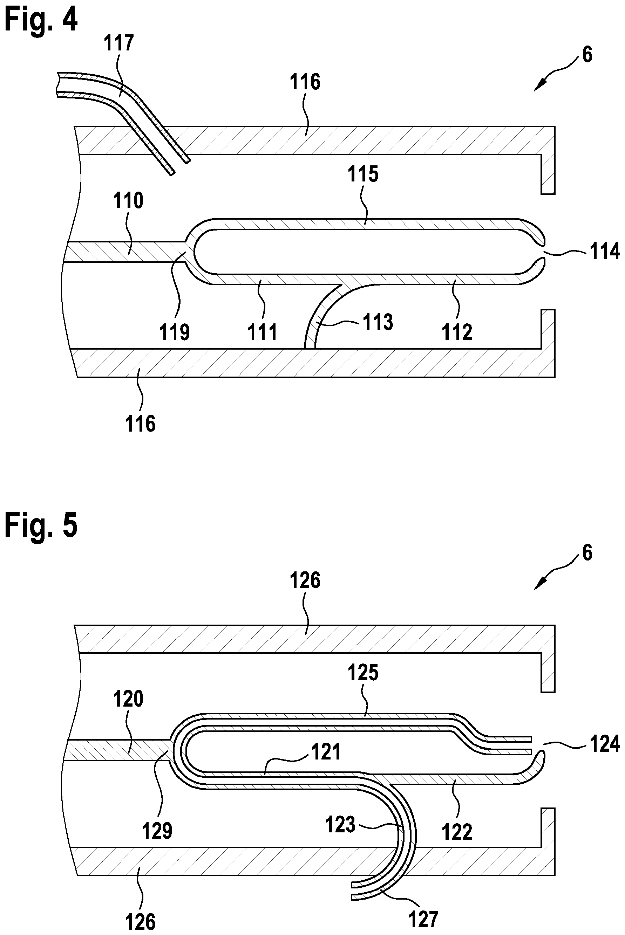

Die Figuren 4 und 5 zeigen vorteilhafte Konstruktionen des Plasmazündkopfs 6:
Der Plasmazündkopf 6, ausgebildet als Strahlerkopf, in Fig. 4 verdeutlicht das Grundprinzip. Ein kreisrunder metallischer Innenleiter 110 der koaxialen Zuleitung weist den Wellenwiderstand auf. Dieser ist von einem rohrförmigen metallischen Außenleiter 116 umschlossen. Eine Zündeinheit setzt sich aus Innenleiterbauelementen, nämlich einer Zuführungsleitung 111, einem ersten Teil eines Impedanztransformators 112 und einem zweiten Teil des Impedanztransformators 113, zusammen. Eine Betriebseinheit besteht aus einer Innenleiterbaugruppe 115 .

Der Innenleiter 115 weist eine elektrische Länge von 180° auf, das heißt, solange in einem Plasmabereich 114 noch kein Plasma gezündet wurde, wird der elektrische Abschluss an der Stelle 114 in Form eines Leerlaufs über die Lambda/2-Leitung 115 zum Teilerpunkt 119 in einen Leerlauf transformiert.

Somit ist vor der Zündung der obere Teil 115 aus elektrischer Sicht als nicht vorhanden zu betrachten. Im unteren Bereich wird über die Zuführungsleitung 111, die im Bereich von knapp 90° elektrischer Länge liegt, ein Impedanztransformator, bestehend aus dem ersten Teil 112 und dem zweiten Teil 113, angekoppelt. Für diesen zweistufigen Impedanztransformator lasst sich als Ersatzschaltung ein Spartrafo, bestehend aus dem Teil 113 und einem Teil von 112 und einem sogenannten Gamma-Transformator, bestehend aus dem zweiten Teil von 112 und der Endkapazität zwischen 114 und der Gehäusemasse 116, verwenden.

Fügt man zwischen der Zuführungsleitung 111 und dem Teil 113 einen Spalt entsprechend einem Serienkondensator ein, so erhält man am Eingang aus dem Kondensator und einem Teil von 113 eine weitere Transformationsstufe in Form des zweiten Gamma-Transformators.

Wenn über die Zündeinheit in 114 ein Plasma entsteht, dann wird die Plasmaimpedanz über die Lambda/2-Leitung 115 zum Teilerpunkt 119 transformiert. Nun kann über diese Leitung 115 Energie in das Plasma eingekoppelt werden. Diese Energie vergrößert das Plasma, was dadurch elektrisch niederohmiger wird. Letztlich muss der Wellenwiderstand der Zuleitung 110 der Plasmaimpedanz im Punkt 114, der sogenannten Plasmafußpunktimpedanz, bei voller Leistungseinkopplung entsprechen, um Leistungsanpassung zu gewährleisten.

Die Zündeinheit stört im Betriebsfall nicht mehr, da die Leitungslänge 111 so optimiert ist, dass die elektrische Länge zwischen dem Teilerpunkt 119 und dem Massepunkt der Leitung 113 90° bzw. Lambda/4 entspricht. Das heißt, dass der Kurzschluss des Massepunkts über diese beiden Leitersegmente zu einem Leerlauf im Teilerpunkt 119 transformiert wird.

Zur Realisierung eines Strahlers gibt es eine Gaszuleitung 117.

Auch der Strahler Fig. 5 funktioniert dementsprechend. Hierbei haben die Bauelemente 120 bis 129 die gleiche Funktion wie die Bauelemente 110 bis 119 in der Fig. 4. Die zuvor stabförmigen Innenbauelemente 111, 113 und 115 sind jedoch durch rohrförmige Bauelemente 121, 123 und 125 ersetzt worden. Dies ändert elektrisch nichts. Das Rohr 123 ist jedoch verlängert worden und ersetzt als Kanülenrohr die Gaszuführung 117, die jedoch weiterhin optional enthalten sein kann (nicht abgebildet).

Die Geometrie der Betriebseinheit, bestehend aus der Innenleiterbaustufe 125, ist hierbei an die angestrebte Funktion anzupassen: soll ein schmaler Plasmastrahl, so ist eine kleine runde Öffnung vorzuziehen, wohingegen in einem anderen Fall, in dem ein möglichst breiter Strahl von Vorteil ist, eine breite ellipsenförmige Ausgestaltung vorzugswürdig ist.

## Patentansprüche

1. Verfahren zur Spektrometrie, insbesondere Massenspektrometrie, Ionenmobilitätsspektrometrie oder optische Emissionsspektroskopie, einer Probe (10), umfassend folgende Schritte:
• Bereitstellen eines Solid-State-Generators (2) zum Erzeugen eines hochfrequenten Signals mit einem Stellelement zum Variieren der Leistung des Signals,
• Bereitstellen eines vom Signal gespeisten Plasmazündkopfes (6) zum Erzeugen eines Plasmastrahls (9),
• Beaufschlagen der Probe (10) mit dem Plasmastrahl (9),
• Durchführen eines ersten Messvorgangs (12), wobei der Plasmastrahl (9) mit einer ersten Leistung des Solid-State-Generators (2) erzeugt wird und ein von der Probe (10) emittiertes Spektrums, vorzugsweise Ionen und/oder optisches Spektrum, mit einem Spektrometer (11) erfasst wird, wobei die erste Leistung zu einer weichen Ionisierung der Probe (10) führt, und
• Durchführen eines zweiten Messvorgangs (13) an derselben Probe (10), wobei der Plasmastrahl (9) mit einer zweiten Leistung des Solid-State-Generators (2) erzeugt wird und ein von der Probe (10) emittiertes Spektrums, vorzugsweise Ionen und/oder optisches Spektrum, mit dem Spektrometer (11) erfasst wird, wobei die zweite Leistung zu einer harten Ionisierung der Probe (10) führt.

2. Verfahren nach Anspruch 1, wobei die erste Leistung zwischen 1 W (Watt) und 70 W , vorzugsweise zwischen 5 W und 50 W, liegt.

3. Verfahren nach einem der vorhergehenden Ansprüche, wobei die zweite Leistung zwischen 30 W und 500 W, vorzugsweise zwischen 40 W und 200 W, liegt.

4. Verfahren nach einem der vorhergehenden Ansprüche, wobei die beiden Messvorgänge abwechselnd, mehrfach hintereinander ausgeführt werden.

5. Verfahren nach Anspruch 4, wobei die Leistung abwechselnd und gepulst zwischen der ersten Leistung und der zweiten Leistung hin und her gestellt wird.

6. Verfahren nach Anspruch 4 oder 5, wobei die Leistung abwechselnd von der ersten Leistung auf die zweite Leistung kontinuierlich erhöht und/oder wieder kontinuierliche auf die erste Leistung gesenkt wird.

7. Verfahren nach einem der vorhergehenden Ansprüche, wobei die Probe bei der Durchführung des Verfahrens außerhalb des Spektrometers (11) angeordnet ist.

8. Verfahren nach einem der vorhergehenden Ansprüche, wobei das hochfrequente Signal eine Frequenz zwischen 100 MHz und 10 GHz, vorzugsweise zwischen 1 GHz und 5 GHz, aufweist.

9. Verfahren nach einem der vorhergehenden Ansprüche, wobei der zweite Messvorgang (13) unmittelbar, vorzugsweise binnen höchstens 10 Sekunden, besonders vorzugsweise binnen höchsten 5 Sekunden, auf den ersten Messvorgang (12) folgt.

10. Verfahren nach einem der vorhergehenden Ansprüche, wobei nach dem ersten Messvorgang (12) die Leistung schrittweise und/oder kontinuierlich erhöht wird.

11. Verfahren nach einem der vorhergehenden Ansprüche, wobei nach dem ersten Messvorgang (12) die Leistung zunächst verringert und dann auf die zweite Leistung erhöht wird.

12. Verfahren nach einem der vorhergehenden Ansprüche, wobei auch zwischen den beiden Messvorgängen (12, 13) die Probe (10) mit dem Plasmastrahl (9) unterschiedlicher Leistung beaufschlagt wird und eines von der Probe (10) emittierten Spektrums mit dem Spektrometer (11) erfasst wird.

13. Verfahren nach einem der vorhergehenden Ansprüche, wobei auf die zweite Leistung erhöht wird, sobald am Spektrometer (11) die weiche Ionisierung erkannt wird.

14. Verfahren nach einem der vorhergehenden Ansprüche, wobei zumindest zwei unterschiedliche Plasmazündköpfe bereitgestellt werden und vor dem beaufschlagen der Probe (10) mit dem Plasmastrahl (9) der zur Probe (10) passende Plasmazündkopf (9) elektrisch leitend mit dem Solid-State-Solid-State-Generator (2) verbunden wird.

15. Spektroskopievorrichtung (1), vorzugsweise zur Durchführung eines Verfahrens nach einem der vorhergehenden Ansprüche, umfassend
• einen Solid-State Solid-State-Generator (2) zum Erzeugen eines hochfrequenten Signals mit einem Stellelement zum Variieren der Leistung des Signals,
• einen vom Signal gespeisten Plasmazündkopf (6) zum Erzeugen eines Plasmastrahls (9) und ausgebildet zum Beaufschlagen einer zu spektroskopierenden Probe (10) mit dem Plasmastrahl (9), und
• eine Steuervorrichtung (5), ausgebildet zum Ansteuern des Stellelements, um einen Plasmastrahl (9) mit zumindest zwei unterschiedlichen Leistungen zu erzeugen.
